(19) **Europäisches Patentamt European Patent Office Office européen des brevets**

(11) **EP 3 657 784 B1**

(12) **FASCICULE DE BREVET EUROPEEN**

(45) Date de publication et mention de la délivrance du brevet:
**20.03.2024 Bulletin 2024/12**

(21) Numéro de dépôt: **20151198.7**

(22) Date de dépôt: **02.07.2010**

(51) Classification Internationale des Brevets (IPC):
**H04N 23/81** *(2023.01)* **H04N 25/13** *(2023.01)*
**H04N 25/61** *(2023.01)* **H04N 25/611** *(2023.01)*

(52) Classification Coopérative des Brevets (CPC):
**H04N 23/81; H04N 25/134; H04N 25/61; H04N 25/611**

(54) **PROCÉDÉ D'ESTIMATION D'UN DÉFAUT D'UN SYSTÈME DE CAPTURE D'IMAGES ET SYSTÈMES ASSOCIÉS**

VERFAHREN ZUM ABSCHÄTZEN EINES FEHLERS EINES BILDERFASSUNGSSYSTEMS, UND ENTSPRECHENDE SYSTEME

METHOD FOR ESTIMATING A FAULT OF AN IMAGE CAPTURING SYSTEM AND ASSOCIATED SYSTEMS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **21.07.2009 FR 0955075**

(43) Date de publication de la demande:
**27.05.2020 Bulletin 2020/22**

(62) Numéro(s) de document de la (des) demande(s) initiale(s) en application de l'article 76 CBE:
**10742180.2 / 2 457 379**

(73) Titulaire: **Lens Correction Technologies 75001 Paris (FR)**

(72) Inventeurs:
• **CAO, Frédéric**
  **92100 BOULOGNE-BILLANCOURT (FR)**
• **GUICHARD, Frédéric**
  **75012 PARIS (FR)**
• **NSEIR, Ayham**
  **75016 PARIS (FR)**

(74) Mandataire: **Plasseraud IP 66, rue de la Chaussée d'Antin 75440 Paris Cedex 09 (FR)**

(56) Documents cités:
**US-A1- 2003 234 872    US-A1- 2003 234 879
US-A1- 2008 055 455**

**Description**

La présente invention est relative aux défauts des systèmes de capture d'images.

Un système de capture d'images (fixes ou animées selon les cas) peut par exemple être un module apte à être utilisé dans un appareil photo numérique, un appareil reflex, un scanner, un fax, un endoscope, une caméra, un caméscope, une caméra de surveillance, un jouet, une caméra, un appareil photo intégré ou relié à un téléphone, à un assistant personnel ou à un ordinateur, une caméra thermique, un appareil d'échographie, un appareil d'imagerie IRM (résonance magnétique), un appareil de radiographie à rayons X, etc.

Il comprend classiquement un capteur et un système optique comprenant une ou plusieurs lentilles pour focaliser la lumière vers le capteur.

Le système optique est caractérisé par un certain nombre de caractéristiques, parmi lesquelles on peut citer les dimensions, le nombre de lentilles, les matériaux utilisés pour les lentilles, la forme des lentilles, le positionnement des différents éléments constituants du système le long d'un axe optique, etc.

Le capteur, quant à lui, est un système d'éléments photosensibles (par exemple des pixels) qui transforme une quantité de lumière reçue en valeurs numériques, et qui attribue à chaque pixel la ou les valeurs qui lui correspondent. L'image brute directement acquise par le capteur est traditionnellement appelée image RAW. Le nombre de valeurs numériques finalement attribuées à chaque pixel dépend du système de prise de vue.

Le capteur peut être par exemple un détecteur à transfert de charge CCD (Charged Coupled Device), un CMOS (Complementary Metal Oxyde Semiconductor), un CID (Charge Induced Device), un IRCCD (Infra-Red CCD), un ICCD (Intensified CCD), un EBCCD (Electron Bombarded CCD), un MIS (Métal Insulator Semiconductor), un APS (Active Pixel Sensor), un QWIP (Quantum Well Infrared Photodetectors), un MPQ (Multi-Puits Quantiques), ou autre. Il peut éventuellement être associé à un filtre par exemple de Bayer ou encore panchromatique afin d'obtenir une image couleur.

Un système de capture d'images est censé produire une image fidèle à une scène photographiée. En particulier, un système de capture d'images doit pouvoir traduire les variations dans le champ des propriétés des objets dans la scène photographiée, comme leur albédo (la manière dont ils reflètent la lumière), leur distance à la caméra, ou autre.

En pratique toutefois, un système de capture d'images présente généralement des défauts, par exemple liés à sa conception ou à sa fabrication, qui produisent euxmêmes des variations dans le champ de l'image acquise. Par conséquent, les variations présentes dans l'image acquise ne sont pas seulement liées aux propriétés de la scène photographiée, mais proviennent également d'un ou plusieurs défauts du système de capture d'images. Il peut en résulter une gêne pour l'œil humain auquel une telle image est soumise.

Les différents types de défauts d'un système de capture d'images produisant une variation dans le champ d'une image acquise avec le système de capture d'images d'au moins une caractéristique de l'image peuvent être nombreux.

On peut par exemple citer le vignettage en luminance. Celui-ci fait que l'image acquise par un système de capture d'images est plus sombre au bord qu'au centre. Le défaut de vignettage en luminance produit une variation dans le champ d'une image acquise avec le système de capture d'images d'au moins une caractéristique correspondant au niveau de gris. Ce défaut produit une variation qui est statistiquement d'un ordre de grandeur plus faible que la variation de niveau de gris produite par le niveau d'éclairement et la réflectance des objets de la scène.

Un autre exemple de défaut d'un système de capture d'images est le vignettage coloré. Ce défaut produit une variation dans le champ d'une image acquise avec le système de capture d'images d'au moins une caractéristique correspondant à la colorimétrie. Ce défaut produit une variation qui est statistiquement d'un ordre de grandeur plus faible que la variation de colorimétrie produite par la couleur des objets de la scène. Il correspond à une variation des réponses spectrales du système de capture d'images (capteur + filtre infrarouge) en fonction de la position dans le champ. En conséquence, une surface parfaitement uniforme, éclairée avec une source lumineuse unique, ne conduit pas à une réponse homogène sur le capteur en termes de couleur. Les variations dépendent de la distribution spectrale de la source lumineuse, qui est imprédictible à partir de la seule image, ainsi que de l'angle d'incidence avec lequel chaque élément photosensible du capteur reçoit la lumière. Le problème se pose pour tout capteur contenant différents types d'éléments photosensibles, comme les capteurs utilisant un réseau de Bayer qui répète un motif de quatre pixels (deux verts, un rouge, un bleu), mais également d'autres types de réseau.

Un autre exemple de défaut d'un système de capture d'images est le flou non uniforme. Ce défaut produit une variation dans le champ d'une image acquise avec le système de capture d'images d'au moins une caractéristique correspondant au flou. Ce défaut produit une variation qui est statistiquement d'un ordre de grandeur plus faible que la variation de netteté produite par les objets de la scène. Ce défaut est notamment lié à la notion de courbure de champ. En effet, la position de meilleur focus n'étant généralement pas plane, mais courbe, il en résulte une variation de flou suivant cette courbe lors de l'utilisation d'un capteur plan.

La courbe est en outre dépendante de la longueur d'onde, si bien que la variation de flou n'est pas la même selon la couleur qu'on observe. Ce défaut est connu sous le nom d'aberration chromatique.

On notera que le flou non uniforme peut également être lié à d'autres facteurs, comme un manque d'uniformité de la netteté due à la qualité de la production de l'optique.

Dans le cas où le système optique utilisé est de type autofocus, le flou dans l'image acquise peut aussi être influencé par la mobilité de la ou des lentilles par rapport au capteur, ou bien des lentilles les unes par rapport aux autres. Cette mobilité des lentilles n'est en effet pas toujours complètement contrôlée et les lentilles peuvent parfois s'incliner (décentrement, tilt optique, etc.), ce qui implique que leurs axes optiques changent. Ces mouvements relatifs changent les propriétés optiques dans le champ. Par exemple, en première approximation, ils reviennent à changer la distance des objets dans le champ et donc leur netteté dans l'image. Ces mouvements sont aléatoires et par nature imprédictibles.

Un autre exemple de défaut d'un système de capture d'images comprenant un capteur utilisant un filtre de Bayer provient de ce que les deux pixels verts (notés Gr et Gb) d'une même maille du réseau peuvent être significativement différents, et cette différence peut varier dans le champ. Ce défaut produit une variation dans le champ d'une image acquise avec le système de capture d'images d'au moins une caractéristique correspondant à la structure du bruit. Ce défaut produit une variation qui est statistiquement d'un ordre de grandeur plus faible que la variation de structure produite par les objets de la scène.

La liste des défauts mentionnés ci-dessus n'est pas exhaustive. D'autres défauts d'un système de capture d'images produisant une variation dans le champ d'une image acquise avec le système de capture d'images d'au moins une caractéristique peuvent être envisagés, comme cela apparaîtra à l'homme du métier.

On peut citer par exemple le défaut de bruit non uniforme produisant une variation de niveau de bruit dans l'image qui est statistiquement d'un ordre de grandeur plus faible que la variation de détails fins des objets de la scène, les défauts de géométrie comme la distorsion ou l'aberration chromatique produisant une variation de la déformation locale dans l'image qui est statistiquement d'un ordre de grandeur plus faible que la variation de géométrie des objets de la scène, les défauts de niveau de noir non uniforme produisant une variation du niveau de noir dans l'image qui est statistiquement d'un ordre de grandeur plus faible que la variation de niveau de noir des objets de la scène, le défaut de "flare" produisant une variation de contraste d'un ordre de grandeur plus faible que la variation de contraste due à la scène, les défauts optiques non uniformes dans le champ produisant une variation d'au moins une caractéristique dans l'image, les défauts du capteur non uniformes dans le champ produisant une variation d'au moins une caractéristique dans l'image.

Certains des défauts présentés par un système de capture d'images entraînent des variations dans l'image acquise indépendantes des conditions et des paramètres de prise de vue de l'image. D'autres, en revanche, produisent une variation dans le champ d'au moins une caractéristique de l'image acquise, qui est dépendante d'au moins une condition de prise de vue et/ou au moins un paramètre de prise de vue de l'image. Ainsi, le vignettage coloré et le flou non uniforme mentionnés plus haut sont des exemples de défauts de ce deuxième type.

Constitue une condition de prise de vue, notamment tout ou partie des éléments suivants : la distance des objets (ou distance entre la scène et la caméra), le cadrage de la scène, les caractéristiques de l'illuminant ou des illuminants (comme la réponse spectrale, la température moyenne, la teinte, l'intensité lumineuse, la position des sources lumineuses, etc.), le contenu de la scène (position des objets dans la scène, couleur moyenne, ou autre), la température, la position géographique (en particulier pour les caméras munies d'un système de positionnement de type GPS (Global Positioning System) ou autre), et/ou l'heure de la journée, etc.

Constitue un paramètre de prise de vue, notamment tout ou partie des éléments suivants : le type d'optique utilisée dans le cas où l'optique est interchangeable, l'exemplaire du système de capture utilisé, la distance focale, la distance de focus, la surexposition ou la sous-exposition, l'activation du flash et son intensité, le temps d'exposition, l'amplification du capteur, la compression, la balance des blancs etc.

Les défauts entraînant des variations dans le champ indépendantes des conditions et des paramètres de prise de vue sont traditionnellement corrigés par une phase de mesure et de détermination de paramètres de correction, appelée calibrage (ou calibration). Ce calibrage est généralement réalisé en laboratoire, à la sortie de la chaîne de fabrication des systèmes de capture d'images. Il utilise une image de référence représentant une scène prédéterminée, comme une mire par exemple.

Au cours du calibrage, on prend au moins une prise de vue d'une scène prédéterminée et on en dérive un ou plusieurs jeux fixes de paramètres de correction. Par exemple WO 03/007241, WO 03/007237 et WO 03/007242 décrivent une telle méthode.

Le calibrage est donc une phase additionnelle à la fabrication des systèmes de capture d'images, nécessitant un certain temps qui pénalise les débits de production. Il nécessite en outre de stocker les paramètres de correction obtenus à l'issue du calibrage dans une mémoire permanente.

Ces phénomènes sont aggravés lorsqu'on souhaite corriger des défauts qui, du fait par exemple de leur nature et/ou des tolérances utilisées à la fabrication, ont des manifestations variables d'un système de capture d'images à un autre. En effet, un calibrage à l'unité, et non par module c'est-à-dire par type de système de capture d'images, est nécessaire dans ce cas. Le calibrage doit par exemple se faire par unité sur la chaîne de fabrication dans le cas d'un défaut variable selon au moins une incertitude de fabrication du système de capture d'images.

A titre d'exemples non limitatifs de défauts dépendant d'une incertitude de fabrication du système de capture d'images, on peut citer :

- le défaut de variation de colorimétrie dans le champ dépend notamment de l'incertitude de fabrication du système de capture d'images suivante : la forme et le positionnement des éléments optiques les uns par rapport aux autres et par rapport au capteur,

- le défaut de variation de luminance dans le champ dépend notamment de l'incertitude de fabrication du système de capture d'images suivante : la forme et le positionnement des éléments optiques les uns par rapport aux autres et par rapport au capteur,

- le défaut de variation de netteté dans le champ dépend notamment de l'incertitude de fabrication du système de capture d'images suivante : la forme et le positionnement des éléments optiques les uns par rapport aux autres et par rapport au capteur.

En ce qui concerne les défauts présentant une dépendance à certaines conditions de prise de vue et/ou certains paramètres de prise de vue, la situation est plus délicate encore.

Un calibrage des systèmes de capture d'images comme mentionné plus haut ne permet d'obtenir que des paramètres de correction directement liés aux conditions et paramètres de prise de vue particuliers mis en oeuvre pendant cette phase. Ces paramètres de correction ne sont en revanche plus adaptés, lors de l'utilisation ultérieure du système de capture d'images calibré, pour corriger la manifestation de ces défauts sur des images acquises avec d'autres conditions et/ou d'autres paramètres de prise de vue. L'utilisation de ces mêmes paramètres de correction indépendamment des conditions et paramètres de prise de vue conduirait à l'obtention d'images de mauvaise qualité.

Pour des défauts variables selon au moins une condition de prise de vue mesurable par le système de capture d'images, comme par exemple la température de l'illuminant, il est connu de faire un calibrage pour plusieurs conditions de prises de vue, et les paramètres de correction dépendent de conditions de prise de vue variables. Par exemple WO 03/007236 et WO 03/007239 décrivent une telle méthode.

Il en est de même pour des défauts variables selon au moins un paramètre de prise de vue, comme par exemple la focale. Le calibrage se fait alors pour plusieurs paramètres de prises de vue, et les paramètres de correction dépendent de paramètres de prise de vue variables. Par exemple WO 03/007236 et WO 03/007239 décrivent une telle méthode.

Pour des défauts variables selon au moins une condition de prise de vue et/ou un paramètre de prise de vue non mesurable par le système de capture d'images, comme par exemple la réponse spectrale de l'illuminant, une méthode basée sur le calibrage ne fonctionne tout simplement pas.

Ainsi, soit les défauts présentant une dépendance à au moins une condition de prise de vue et/ou au moins un paramètre de prise de vue peuvent faire l'objet d'un calibrage, mais celui-ci est alors complexe et il ne permet d'obtenir que des paramètres de correction peu adaptés à des conditions de prise de vue et/ou paramètres de prise de vue non prévus pendant le calibrage ; soit ils ne peuvent même pas faire l'objet d'un calibrage, et par conséquent ne peuvent être corrigés.

Il est à noter également qu'il existe des procédés d'estimation à partir d'une image comme par exemple l'estimation de balance des blancs, mais il ne s'agit pas d'un défaut du système de capture d'images, mais plutôt d'un paramètre de prise de vue estimé à partir de l'image.

La demande américaine publiée sous le numéro US 2008/055455 A1 décrit une solution alternative à celle de l'invention pour un procédé d'estimation à la volée d'un défaut de vignettage coloré d'un système de capture d'images. Les demandes américaines publiées sous les numéros US 2003/234879 A1 et US 2003/234872 A1 décrivent des procédés de correction de non-uniformités de colorimétrie pour un appareil photo numérique nécessitant une calibration.

Un but de la présente invention est de remédier à certains au moins des inconvénients susmentionnés.

L'invention propose ainsi un procédé d'estimation de défaut de vignettage coloré d'un système de capture d'images, tel que revendiqué dans les revendications 1 à 11.

En estimant le défaut du système de capture d'images selon le procédé proposé, on s'affranchit d'un calibrage tel que mentionné plus haut et des inconvénients qui lui sont associés (coût de mise en oeuvre, utilisation d'une mire, stockage de données dans une mémoire permanente, etc.). On peut en outre estimer des défauts qui n'étaient pas corrigeables par calibrage.

L'estimation du défaut ainsi réalisée peut être exploitée à différentes fins et/ou par différents acteurs. Par exemple, elle peut servir à qualifier des systèmes de capture d'images, à effectuer à une correction du défaut, ou autre.

L'invention propose aussi un système agencé pour estimer un défaut de vignettage coloré d'un système de capture d'images selon le procédé susmentionné, tel que revendiqué à la revendication 12.

L'invention propose encore un produit programme d'ordinateur et/ou un circuit électronique comprenant des instructions de code adaptées pour mettre en oeuvre le procédé susmentionné d'estimation d'un défaut de vignettage coloré d'un système de capture d'images.

D'autres particularités et avantages de la présente invention apparaîtront dans la description ci-après d'exemples de réalisation non limitatifs, en référence aux dessins annexés, dans lesquels :

- la figure 1 est un schéma montrant un exemple de système de capture d'images dans lequel l'invention peut être mise en oeuvre ;

- la figure 2 est un schéma montrant une séquence d'étapes mises en oeuvre selon l'invention ;
- la figure 3 est un schéma montrant une segmentation d'image pouvant être mise en oeuvre selon un mode de réalisation de l'invention ;
- la figure 4 est un schéma montrant une séquence d'étapes mises en oeuvre selon un exemple d'application de l'invention pour l'estimation du défaut de vignettage coloré.

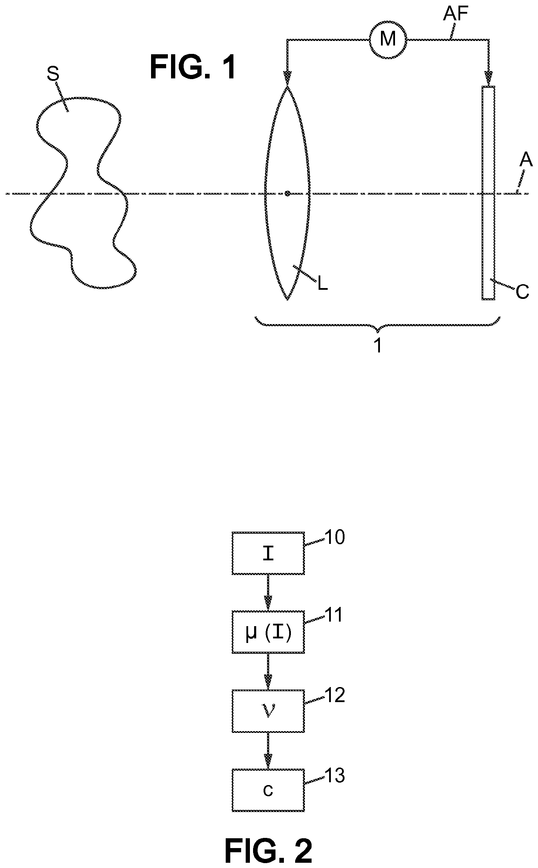

La figure 1 montre un exemple de système de capture d'images 1. Celui-ci comprend classiquement un capteur C et un système optique incluant au moins une lentille L, qui peuvent prendre toute forme envisageable comme exposé en introduction.

Optionnellement, le système de capture d'images 1 peut comprendre un système autofocus AF agencé pour assurer un déplacement relatif entre le système optique L et le capteur C, par exemple à l'aide d'un moteur M. Ce déplacement est avantageusement une translation selon l'axe optique A du système de capture d'images, bien que d'autres mouvements puissent être également envisagés, par exemple selon les axes perpendiculaires à l'axe optique pour obtenir un effet de stabilisation d'image.

Lorsque le système optique L comprend une pluralité de lentilles, seule une partie d'entre elles peuvent éventuellement subir un déplacement relatif par rapport au capteur C. Un déplacement relatif entre certaines lentilles du système optique L est également possible.

Optionnellement, le système de capture d'images 1 peut comprendre un zoom optique, pour permettre un changement d'échelle.

Le système de capture d'images 1 est capable d'acquérir au moins une image I quelconque représentant une scène S quelconque. Par image quelconque représentant une scène quelconque, on entend une image qui n'est pas acquise dans des conditions particulières prédéterminées et dont le contenu n'est pas lui-même connu à l'avance. Il s'agit typiquement d'une image acquise au cours de la vie du système de capture d'images 1, sans contrainte particulière. A contrario, une image de référence, telle qu'une mire, acquise en laboratoire ne tombe pas dans cette définition.

L'image I acquise peut comprendre une seule valeur par pixel correspondant à un seul canal, notamment s'il s'agit d'une image RAW. En alternative, l'image I peut avoir plusieurs valeurs par pixel, par exemple trois valeurs correspondant respectivement aux trois canaux rouge, vert et bleu (R,G,B). D'autres possibilités sont également envisageables, comme cela apparaîtra l'homme du métier. Par ailleurs, l'image I peut être fixe ou bien animée (vidéo).

On suppose que le système de capture d'images 1 présente un certain nombre de défauts. Ce ou ces défauts produisent, vis-à-vis de l'image I, une variation dans le champ d'au moins une caractéristique de cette image I. Autrement dit, une caractéristique de l'image I prend des valeurs dépendant de la position dans le champ.

Le système de capture d'images 1 présente le défaut de vignettage coloré mentionné en introduction. Ce défaut produit, vis-à-vis d'une image I colorée, une variation de colorimétrie dans le champ.

En complément, le système de capture d'images 1 peut présenter le défaut de vignettage en luminance mentionné en introduction. Ce défaut produit, vis-à-vis de l'image I, une variation de luminance dans le champ. En complément, le système de capture d'images 1 peut présenter le défaut de flou non uniforme lié à la courbure de champ. Ce défaut produit, vis-à-vis de l'image I, une variation de flou dans le champ.

En complément, le système de capture d'images 1 utilisant un autofocus AF, comme illustré sur la figure 1, peut présenter un défaut de flou lié à la mobilité de la ou des lentilles L (décentrement, tilt optique, etc.). Ce défaut produit, vis-à-vis de l'image I, une variation de flou dans le champ.

En complément, le système de capture d'images 1 comprenant un capteur utilisant un filtre de Bayer peut présenter un défaut qui fait que deux pixels verts (notés Gr et Gb) d'une même maille du réseau peuvent être significativement différents, et cette différence peut varier dans le champ.

En complément, le système de capture d'images 1 peut comprendre tout autre défaut produisant, vis-à-vis de l'image I, une variation dans le champ d'au moins une caractéristique de cette image I.

Quel que soit le défaut présenté par le système de capture d'images 1, la variation dans le champ de la caractéristique pertinente de l'image I qu'il produit est statistiquement d'un ordre de grandeur plus faible qu'une variation dans le champ de cette même caractéristique introduite par la scène S.

De manière générale, l'invention s'applique ainsi un défaut de vignettage coloré qui produit une variation de caractéristique d'une image statistiquement d'un ordre de grandeur plus faible qu'une variation dans le champ de ladite caractéristique de l'image introduite par la scène, c'est-à-dire que le défaut introduit une variation dans le champ de longueur d'onde sensiblement plus élevée que la longueur d'onde de la variation dans le champ due à la scène. Ceci permet ainsi de s'affranchir de la scène en éliminant les variations dues à la scène comme cela sera décrit plus bas.

On entend par là que, si on se déplace dans le champ de l'image I, la variation produite par le défaut est plus lente et progressive que celle introduite par la scène (laquelle peut induire des transitions brutales entre deux points voisins de l'image). De plus, même lorsqu'on considère l'image I dans son ensemble, l'amplitude globale de la variation produite par le défaut est généralement plus faible que celle introduite par la scène (laquelle peut contenir des contrastes très importants par exemple).

Le fait que la variation produite par le défaut soit "statistiquement" d'un ordre de grandeur plus faible que celle introduite par la scène S provient de ce qu'on considère la variation moyenne d'une scène. Il est cependant possible d'avoir une scène particulièrement stable, présentant une variation particulièrement faible. Ce serait par exemple le cas d'une scène qui représenterait un objet plan monocolore éclairé de manière uniforme. Etant donné qu'on s'intéresse à une scène S quelconque, ce cas de figure est cependant statistiquement peu probable. La variation produite par le défaut est donc bien en général d'un ordre de grandeur plus faible que celle introduite par la scène S quelconque.

Cela n'empêche bien sûr pas que la variation produite par le défaut soit localement d'un ordre de grandeur égal ou supérieur à celle introduite par la scène S quelconque, notamment si cette dernière contient localement des objets stables. Cette stabilité locale de la scène S peut d'ailleurs éventuellement être exploitée pour estimer le défaut, en détectant des zones homogènes correspondantes, comme cela sera expliqué plus bas.

Si par hasard, la scène S quelconque photographiée se trouve induire une variation du même ordre de grandeur, voire d'un ordre de grandeur plus faible, que le défaut du système de capture d'images 1, les étapes suivantes du procédé peuvent tout de même être mises en oeuvre. Il s'ensuivra éventuellement une sur-correction ou une mauvaise correction de l'image. Par exemple un dégradé dans la scène peut être rendu uniforme par la correction. La perte d'information en résultant peut cependant ne pas être gênante au niveau visuel, ou en tout cas entraîner une gêne inférieure à celle qui existerait si on laissait le défaut du système de capture d'images 1 en l'état.

Si l'on s'intéresse à la couleur par exemple, on peut supposer que la scène S quelconque comporte des objets de différentes couleurs, éclairés avec des lumières ayant des spectres différents. De ce fait, la couleur de la scène peut varier de manière assez importante en amplitude. Elle peut éventuellement varier de façon significative même entre deux points de la scène S relativement proches, par exemple si la scène comporte deux objets voisins de couleurs différentes.

Le vignettage coloré, en revanche, est un phénomène dont l'amplitude dépend au premier ordre de l'angle d'incidence de la lumière reçue sur le capteur. En conséquence de ce phénomène, la couleur varie donc relativement faiblement et lentement dans le champ. Cette variation de couleur est donc bien d'un ordre de grandeur statistiquement plus faible que celle introduite par la scène S elle-même.

Un autre facteur du vignettage coloré est qu'il s'agit d'un phénomène qui a une certaine cohérence spatiale. Il suffit de pouvoir l'estimer en quelques endroits du champ pour le déduire partout à une bonne approximation près.

Comme cela a été exposé en introduction, selon le type de défaut considéré, la variation dans le champ d'au moins une caractéristique de l'image I produite par le défaut du système de capture d'images 1 peut dépendre d'une ou plusieurs conditions de prise de vue et/ou d'un ou plusieurs paramètres de prise de vue de cette image I, telles que définis plus haut.

C'est le cas pour le vignettage coloré. Ce phénomène dépendant de l'angle d'incidence de la lumière reçue sur le capteur, la variation de couleur en résultant ne sera pas nécessairement la même en fonction de l'éclairage de la scène observée, et ce, même si les objets présents dans la scène restent les mêmes. La même dépendance à certaines conditions et/ou paramètres de prise de vue de la variation dans le champ d'une caractéristique de l'image I existe pour d'autres types de défaut, comme le flou non uniforme ou autre.

Dans certains cas, la variation dans le champ d'au moins une caractéristique de l'image I produite par le défaut considéré du système de capture d'images 1 pourra être propre à ce système de capture d'images. Autrement dit, différentes unités d'un même modèle pourront présenter une variation différente de cette caractéristique de l'image I en relation avec le défaut considéré.

Cette dépendance au système de capture d'images peut par exemple être induite par des caractéristiques éventuellement variables des systèmes de capture d'images, par exemple du fait de tolérances de fabrication. A titre d'exemple, un léger tilt du système optique L par rapport au capteur C du système de capture d'images 1 peut entraîner une modification de la courbure de champ et donc du flou non uniforme produit par ce système.

Comme illustré sur la figure 2, on dispose de l'image I acquise par le système de capture d'images 1 présentant au moins un défaut conformément à ce qui a été exposé plus haut (étape 10).

Dans une partie au moins du champ de cette image I, on calcule une mesure $\mu(I)$ relative à la caractéristique de l'image I que le défaut du système de capture d'images 1 fait varier dans le champ (étape 11). Cette mesure $\mu(I)$ a une valeur qui dépend également de la position dans le champ. Cette mesure est donc locale, et sa valeur en chaque point dépend de l'image I dans un voisinage du point considéré.

La mesure $\mu(I)$ peut être calculée en tout point du champ de l'image I, ou bien en certains points seulement de ce champ. A titre d'exemple non limitatif, on pourrait ne calculer la mesure $\mu(I)$ qu'en certains points du champ, dont on a déterminé au préalable, par exemple via une mesure sur l'image, que l'estimation sera fiable ou plus fiable qu'un niveau donné.

Ce calcul est effectué à la volée, c'est-à-dire sur une image I acquise au cours de l'utilisation normale du système de capture d'images 1, par opposition au calibrage réalisé en laboratoire à la sortie de la chaîne de fabrication.

De plus, comme rappelé plus haut, ce calcul est effectué sur au moins une image I quelconque représentant une scène quelconque, par opposition à une image de référence, comme une mire par exemple.

La mesure $\mu(I)$ peut éventuellement être calculée sur plusieurs images I acquises par le système de capture d'images 1. On peut par exemple moyenner les différentes images I entre elles et déduire de ce moyennage une mesure $\mu(I)$. En variante ou en complément, on peut calculer une mesure $\mu(I)$ pour chacune des images I indépendamment, puis moyenner les différentes mesures $\mu(I)$ ainsi obtenues, pour n'en conserver qu'une qui concerne l'ensemble des images.

On peut aussi procéder par calcul récursif, c'est-à-dire en ne stockant à chaque nouvelle image qu'une seule mesure $\mu(I)$ tenant compte d'images précédentes. On évite ainsi d'avoir à mémoriser une valeur $\mu(I)$ pour chacune des images I. En faisant ainsi dépendre la mesure $\mu(I)$ d'images précédentes, on évite en outre les phénomènes d'oscillation ou de papillonnement qui peuvent apparaître lorsque des images successives sont traitées indépendamment les unes des autres.

A titre d'exemples non limitatifs de mesure, $\mu(I)$ peut être un rapport entre le canal vert (G) et le canal rouge (R) de l'image I, défini en tout point où R est non nul, ou en pratique, supérieur à un seuil de précision donné par le niveau de bruit du signal.

On peut aussi calculer une mesure $\mu(I)$ de netteté, par exemple le laplacien d'un canal, uniquement sur les points où le gradient est plus grand qu'une certaine valeur.

D'autres exemples de mesure $\mu(I)$ sont également envisageables, en fonction du ou des défauts présentés par le système de capture d'images 1.

On obtient ensuite, par exemple par calcul, une grandeur v estimative du ou des défauts considérés du système de capture d'images 1, qui dépend de la mesure $\mu(I)$ calculée (étape 12). Cette grandeur v est obtenue dans une partie du champ de l'image I, qui peut être la même que celle où la mesure $\mu(I)$ a été calculée. En alternative, cette partie du champ de l'image I peut être différente de celle où la mesure $\mu(I)$ a été calculée. Dans ce cas, un recouvrement entre les deux parties est possible. Par exemple, la partie du champ où la grandeur v est obtenue peut être une souspartie de celle où la mesure $\mu(I)$ a été calculée. En variante, elle peut elle-même contenir la partie où la mesure $\mu(I)$ a été calculée. Par exemple, la grandeur v peut être obtenue sur tout le champ de l'image I, alors que la mesure $\mu(I)$ a été calculée en certains endroits seulement de ce champ.

La grandeur v obtenue est telle qu'elle présente une variation du même ordre de grandeur que la variation dans le champ de la caractéristique de l'image I produite par le défaut considéré du système de capture d'images 1.

Ce faisant, on s'affranchit de la contribution de la scène S dans les variations de la mesure $\mu(I)$, pour ne conserver que les variations résultant du défaut considéré du système de capture d'images 1.

La grandeur v peut prendre différentes formes. Elle peut par exemple consister en une fonction capable de retourner une valeur en chaque point de l'image I où elle est définie. A titre d'exemple, cette fonction peut être un polynôme fonction de la position dans le champ, ou toute autre fonction dont les variations sont compatibles avec celles introduites dans l'image par le défaut considéré.

En variante, la grandeur v peut consister en un ensemble de paramètres. Etant données les propriétés du défaut du système de capture d'images 1, ce nombre de paramètres peut être avantageusement faible.

A titre d'exemple, l'ensemble de paramètres peut comprendre les coefficients d'un polynôme de degré 3 ou 4. Selon un autre exemple, l'ensemble de paramètres peut comprendre un ensemble de valeurs se rapportant chacune à un point ou un groupe de points de l'image I, comme les valeurs prises par une fonction en ces points ou groupes de points. Selon un autre exemple, la grandeur v peut consister en une pondération entre différentes cartes de valeurs prédéterminées, la pondération se rapportant à un point ou un groupe de points de l'image I. Selon un autre exemple encore, la grandeur v peut consister en un paramètre de sélection locale entre différentes fonctions. D'autres exemples sont également envisageables, comme cela apparaîtra à l'homme du métier.

L'obtention de la grandeur v peut se faire selon toute méthode appropriée. On donne ci-après, à titre d'exemples non limitatifs, deux méthodes possibles.

La première méthode met en oeuvre une segmentation de l'image I, puis une régularisation.

Cette méthode se fonde sur le fait qu'une image I quelconque est susceptible de contenir des zones relativement stables, où la scène représentée varie relativement peu. Elle se fonde également sur l'hypothèse a priori que, dans ces zones homogènes, les variations observées sont essentiellement dues au défaut considéré du système de capture d'images 1.

Selon cette méthode, on recherche donc de telles zones homogènes. A cet effet, on identifie, dans une partie au moins du champ de l'image I, un ensemble de zones homogènes, chacune de ces zones homogènes étant définie comme une région de l'image I à l'intérieur de laquelle la mesure $\mu(I)$ calculée a une variation du même ordre de grandeur que la variation dans le champ de la caractéristique de l'image I produite par le défaut considéré du système de capture d'images 1.

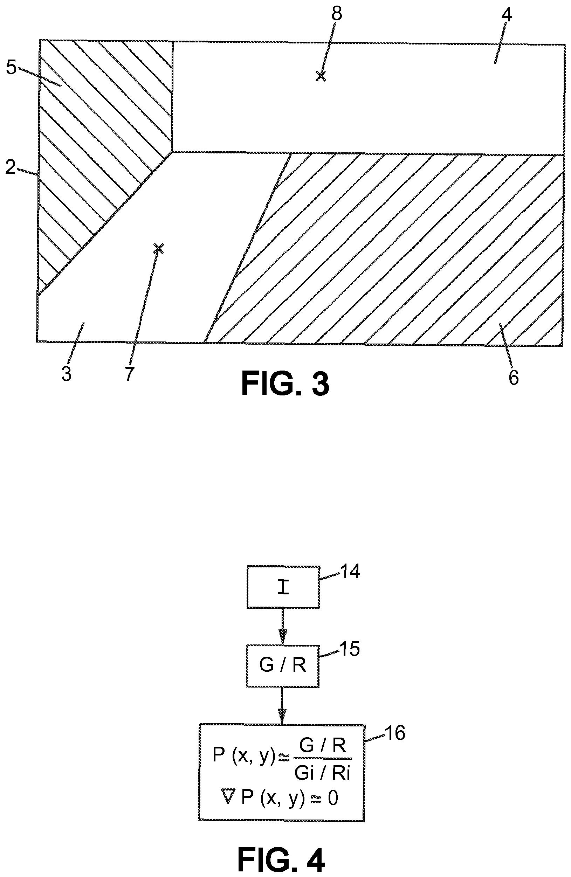

Pour illustrer ce principe, on peut se reporter à la figure 3, qui schématise une image 2 composée essentiellement de quatre régions 3-6. Parmi ces régions, seules les régions 3 et 4 correspondent à des zones homogènes. Par exemple, la région 3 représente un objet homogène tel qu'une table de couleur uniforme et la région 4 représente un autre objet homogène tel qu'un mur de couleur uniforme. En revanche, les régions hachurées 5 et 6 correspondent chacune à une pluralité d'objets non uniformes et/ou difficilement séparables les uns des autres.

L'identification des zones homogènes de l'image I peut se faire par exemple en observant la mesure $\mu(I)$ calculée en différents points du champ, et en détectant les régions où cette mesure varie avec le même ordre de grandeur que la variation dans le champ de la caractéristique de l'image I produite par le défaut considéré du système de capture d'images 1.

Par exemple, les zones homogènes détectées sont les régions de l'image I où la mesure $\mu(I)$ varie lentement dans le champ (les variations plus rapides de la mesure $\mu(I)$ étant probablement dues à la scène S elle-même). Autrement dit, deux positions proches d'une zone homogène ont des valeurs proches. On notera cependant qu'une zone homogène peut très bien comprendre deux points ayant des valeurs $\mu(I)$ éloignées, pourvu qu'il existe un chemin allant d'un point à l'autre, le long duquel les variations de $\mu(I)$ sont lentes.

Cette segmentation de l'image I, c'est-à-dire l'identification d'un ensemble de zones homogènes au sein de l'image I, peut en outre avantageusement être faite de manière que chaque point de l'image I appartienne à une et une seule région. C'est bien ce qui est illustré sur la figure 3, où les régions 3-6 ne se recouvrent pas. Ces régions forment une partition de l'image I.

La segmentation peut se faire par exemple par fusion de région : chaque point de la partie considérée de l'image I est initialement une région. On fusionne les régions qui contiennent deux points voisins x1 et x2, si la mesure $\mu(I)$ calculée est proche en ces deux points, c'est-à-dire si la différence $\mu(x1)-\mu(x2)$ est assez petite (par exemple inférieure à un seuil).

Cet exemple n'est qu'illustratif. On peut en effet utiliser n'importe quel type de segmentation, par exemple un algorithme de type Split and Merge décrit par Horowitz et Pavlidis, ou encore des techniques de type Mumford-Shah incluant la régularité des contours.

La sortie de l'algorithme de segmentation comprend une liste de zones homogènes Zi. Chaque point de l'objet appartient avantageusement au plus à une zone homogène.

On met ensuite en oeuvre une régularisation, de manière à obtenir la grandeur v.

A cet effet, on détermine la grandeur v comme une approximation des variations de la mesure $\mu(I)$ par une fonction régulière, ne variant que sur des grandes échelles. En particulier, sur chaque zone homogène Zi déterminée par la segmentation, l'approximation v ne contient avantageusement que des basses fréquences et est proche des basses fréquences de $\mu(I)$.

En dehors des zones homogènes, on suppose que la grandeur v satisfait un critère de régularité. Cette hypothèse provient de ce que la plupart des défauts des systèmes de capture d'images produisent des effets réguliers sur les images acquises.

Dans cet exemple, la détermination de l'approximation v repose donc sur deux principes:

i/ Les variations de v et les variations de $\mu(I)$ sont localement proches à l'intérieur des zones homogènes ; et

ii/ La fonction v est régulière partout (contrairement à $\mu(I)$ qui peut avoir des discontinuités sur le bord des zones homogènes et aux points qui n'appartiennent à aucune zone homogène, du fait notamment de variations dues à la scène S).

Un moyen de forcer la régularité de la fonction v est de la décrire sur une famille de fonctions régulières, comme des polynômes de faible degré fonctions de la position dans le champ ou encore des sinus et des cosinus de faible fréquence fonctions de la position dans le champ.

La solution optimale établit un compromis entre les deux principes susmentionnés.

Pour imposer le principe i/, on peut par exemple choisir une position de référence xi dans chaque zone homogène Zi. Ce point de référence, noté 7 pour la zone 3, et 8 pour la zone 4, dans l'exemple de la figure 3, peut être quelconque. Il peut par exemple s'agir d'un point défini par sa valeur $\mu(xi)$, qui est par exemple la valeur moyenne ou médiane dans la zone Zi. Il peut aussi s'agir d'un point défini par sa position, qui est par exemple au centre de la zone Zi.

L'obtention de la grandeur v en un point x quelconque de la zone homogène Zi (notée v(x)) peut ainsi être effectuée en rapportant la mesure $\mu(I)$ calculée en ce point (notée $\mu(x)$) à la mesure $\mu(I)$ calculée au point de référence (notée $\mu(xi)$).

Autrement dit, le principe i/ peut être garanti pour tout point x de la zone homogène Zi, en calculant

$$\frac{\mu(x)}{\mu(xi)} \approx \frac{v(x)}{v(xi)}$$

$\mu(x)$ tel que : .

On peut par exemple pénaliser les différences $v(xi)\mu(x) - \mu(xi)v(x)$.

Une autre possibilité permettant de s'affranchir des valeurs de référence est de pénaliser $\nabla(\ln\mu) - \nabla(\ln v)$, où $\nabla$ désigne l'opérateur gradient.

Le critère d'optimalité tient avantageusement compte de toutes les mesures disponibles, en attribuant éventuellement des pondérations différentes selon les positions.

Pour imposer le principe ii/, on peut par exemple pénaliser les variations de v. A cet effet, on peut pénaliser le gradient ou le laplacien de v ou tout autre opérateur décrivant les variations locales de v.

Le critère d'optimalité prend avantageusement en compte toutes les positions dans le champ, en attribuant éventuellement des pondérations différentes selon les positions.

On peut par ailleurs imposer d'autres contraintes globales sur la solution optimale, par exemple que l'amplitude globale ne peut pas dépasser une fraction donnée de la moyenne.

On pourrait penser que dans les zones homogènes de l'image I, la mesure $\mu(I)$ devrait être constante. Cependant, on observe généralement des variations, car les mesures sont sujettes au bruit. La grandeur v, de par les contrainte de régularité imposées, est plus exempte de bruit. Elle peut être utilisée comme estimation de ces variations indésirables. Pour les mêmes raisons, une correction d'image utilisant la grandeur v peut en outre permettre d'aboutir à une réduction de bruit dans l'image.

Selon une deuxième méthode, la grandeur v est obtenue sans qu'il soit nécessaire de passer par deux phases distinctes et successives de segmentation et de régularisation.

Pour ce faire, on part par exemple d'un modèle de variations de la mesure $\mu(I)$. Ce modèle peut par exemple être donné de manière paramétrique ou bien par un certain nombre de cartes apprises.

On utilise un certain nombre de points de référence dans l'image I. On cherche alors à minimiser la somme des erreurs entre la mesure $\mu(I)$ en chaque point de son domaine de définition et en un point de référence. Les variables d'optimisation sont les points de référence (y compris leur nombre), ainsi que la carte de régularisation. Dans le cas de cartes apprises a priori, on peut par exemple chercher la carte qui minimise l'erreur ou bien la combinaison de cartes minimisant l'erreur.

Le nombre de points de référence peut faire l'objet d'une pénalisation, et on peut aussi chercher, pour un nombre donné de points de référence, la position optimale de ces points et la meilleure carte associée.

La grandeur v obtenue peut être utilisée à différentes fins. Elle peut par exemple servir à qualifier le système de capture d'images 1, en fonction de l'estimation du défaut du système de capture d'images 1 qu'elle fournit. Elle peut aussi permettre de sélectionner certains systèmes de capture d'images parmi une pluralité, en ne conservant que ceux qui présentent un faible défaut.

Comme illustré sur la figure 2, la grandeur v obtenue peut avantageusement être utilisée pour déterminer au moins un paramètre de correction c du défaut considéré du système de capture d'images 1 pour une deuxième image I' qui peut être la même que l'image I ou bien être différente de l'image I (étape 13). Ce ou ces paramètres de correction c permettent de déterminer une correction à apporter en tout ou partie de l'image I' pour éliminer ou du moins atténuer l'effet du défaut.

Dans certains cas, la grandeur v donne directement le ou les paramètres de correction c. Dans d'autres cas en revanche, la détermination de ces paramètres de correction c est issue d'un calcul (autre que la fonction identité) réalisé à partir de la grandeur v.

La nature du ou des paramètres de correction c peut être diverse. Il peut s'agir de paramètres décrivant une fonction ou un algorithme de correction, comme les coefficients d'un polynôme fonction de la position dans le champ de degré 3 ou 4 par exemple. Selon un autre exemple, il peut s'agir d'un ensemble de valeurs se rapportant chacune à un point ou un groupe de points de l'image I', comme les valeurs prises par une fonction en ces points ou groupes de points. Il peut encore s'agir d'une pondération entre différentes cartes de valeurs prédéterminées, la pondération se rapportant à un point ou un groupe de points de l'image. D'autres exemples sont également envisageables, comme cela apparaîtra à l'homme du métier.

Pour obtenir des paramètres de correction c valables en chaque point de l'image I', alors que la grandeur v n'aurait été obtenue qu'en certains points seulement de l'image I, une interpolation de la grandeur v peut être mise en oeuvre vis-à-vis des autres points.

Les deux images I et I' sont considérées comme différentes notamment quand elles représentent des scènes différentes. Dans ce cas, les paramètres de correction c déterminés seront quand même adaptés à l'image I', bien que dérivés de la grandeur v obtenue à partir de l'image I, si la variation de la caractéristique produite par le défaut considéré du système de capture d'images 1 est indépendante de la scène. C'est donc avantageusement pour ce type de défaut que de tels paramètres de correction c seront déterminés pour une image I' représentant une scène différente de l'image I.

En procédant de la sorte, on est capable de corriger un défaut du système de capture d'images qui produit une variation d'une caractéristique de l'image acquise, indépendante de la scène. Cette correction peut ensuite être utilisée pour corriger n'importe quelle image acquise par le système de capture d'images 1. De cette façon, une estimation réalisée sur une seule image I peut permettre une correction pour toute une série d'images I' ultérieurement acquises.

On évite ainsi le calibrage du système de capture d'images mentionné en introduction, la correction d'image étant réalisée sur la base d'une estimation effectuée en cours d'utilisation du système de capture d'images.

Les images I et I' sont également considérées comme différentes lorsque ces deux images représentent une même scène S, mais avec une résolution différente. Lorsque la résolution de l'image I' est plus fine que celle de l'image I, la correction inclut avantageusement une interpolation de la grandeur v pour s'adapter à la résolution plus fine de l'image I'.

Les images I et I' sont également considérées comme différentes, lorsqu'elles sont acquises dans des conditions de prise de vue et/ou avec des paramètres de prise de vue différents.

L'image I peut par exemple être acquise par le système de capture d'images 1 juste avant l'image I'. Il peut par exemple s'agir d'une image de pré-capture ou « preview » destinée à déterminer certains paramètres d'acquisition ou à effectuer certains réglages (par exemple à réaliser des mesures de netteté pour certaines positions résultant d'une variation de distance relative entre le système optique L et le capteur C à l'aide du système autofocus AF).

L'image I sur laquelle des paramètres de correction sont déterminés peut éventuellement être plus simple que l'image I' à corriger. Elle peut par exemple avoir une résolution, un nombre de canaux et/ou un nombre de dimensions plus faible que l'image I'. La résolution plus faible de l'image I peut être obtenue notamment par souséchantillonnage d'une grande image de même taille que l'image I',

- par exemple en déterminant des zones dans la grande image et en sélectionnant au moins un pixel de chaque zone ou en moyennant les pixels de chaque zone,

- les zones pouvant obtenues par découpage de la grande image selon une grille régulière ou de manière non régulière,

- les zones pouvant être dépendante ou non du contenu de l'image.

Ceci réduit la complexité des calculs nécessaires et peut en outre éviter d'avoir à mémoriser l'image I.

Lorsque le défaut présenté par le système de capture d'images 1 produit une variation dans le champ d'une caractéristique d'image, dépendante d'au moins une condition et/ou au moins un paramètre de prise de vue, les paramètres de correction c déterminés peuvent ainsi avantageusement être mis en oeuvre sur une image I', éventuellement différente de l'image I, mais acquise par le système de capture d'images 1 avec ladite condition et/ou ledit paramètre de prise de vue identique ou similaire à l'image I.

Une condition de prise de vue et/ou un paramètre de prise de vue pour l'image I' est considéré comme identique ou similaire à la même condition de prise de vue et/ou au même paramètre de prise de vue pour l'image I, si sa variation entre les deux images n'a qu'une influence négligeable ou tolérable par l'œil humain sur la caractéristique d'image modifiée par le défaut considéré. L'étendue de la variation admissible peut donc être différente si l'on considère deux défauts distincts. Ainsi des seuils de variation admissible peuvent être fixés pour ladite condition de prise de vue et/ou ledit paramètre de prise de vue selon le défaut considéré.

Le vignettage coloré dépend du spectre de la lumière éclairant le capteur. Celui-ci dépend en outre de l'illuminant éclairant la scène. Si la source de lumière éclairant la scène n'a pas changé entre les deux images, le vignettage coloré aura en général des valeurs similaires dans les deux images. L'estimation sur la première image permettra alors de corriger correctement la deuxième image.

Si la source de lumière a changé entre les deux images, le vignettage coloré pourra changer entre les deux images, mais dans ce cas la balance des blancs changera également. Dans le cas d'un système de capture d'images avec traitement des images à la volée, au moins une image sera nécessaire pour estimer le vignettage coloré selon l'invention comme c'est le cas pour la balance des blancs.

Dans une variante de réalisation, on enregistre un historique complet ou partiel pour une ou plusieurs images I :

- les conditions de prise de vue et/ou un paramètre de prise de vue,
- ainsi que la mesure $\mu(I)$ ou la grandeur v ou le paramètre de correction c correspondant.

On pourra ainsi lors de capture d'image utiliser l'historique pour éviter de refaire les calculs et réduire la consommation électrique et pour accélérer l'adaptation de la correction à un changement de conditions de prise de vue et/ou un paramètre de prise de vue dans le cas ou le traitement est réalisé à la volée sans stocker l'image I.

Dans le cas où la première image est enregistrée avant traitement par le système de capture d'images, de préférence la première image et la deuxième image sont confondues afin d'obtenir une correction adaptée dans tous les cas.

On peut ainsi déterminer des paramètres de correction pour un phénomène variant avec un ou plusieurs conditions et/ou paramètres de prise de vue, qui ne pouvait pas être corrigé selon le calibrage de l'art antérieur.

Avantageusement, le ou les paramètres de correction c déterminés peuvent être exploités pour corriger l'image I'.

La détermination des paramètres de correction c et/ou la correction de défaut sur la base de ces paramètres peut être mise en oeuvre dans le même système que celui qui calcule la mesure $\mu(I)$ et obtient la grandeur v estimative du défaut, par exemple le système de capture d'images 1 lui-même. A cet effet, ce système comprend, en plus des unités utilisées pour mettre en oeuvre les étapes décrites plus haut, une unité de détermination, à partir de la grandeur v obtenue, du ou des paramètres de correction c dudit défaut pour l'image I' acquise par le système de capture d'images et/ou une unité de traitement appropriée pour mettre en oeuvre la correction sur la base de ces paramètres.

En variante, la détermination des paramètres de correction c et/ou la correction de l'image I' tenant compte de ces paramètres peut être réalisée par un système distinct, qui comprend une unité de détermination des paramètres de correction et/ou une unité de traitement appropriée pour mettre en oeuvre la correction sur l'image I'.

Ainsi, on peut avoir un système d'estimation du défaut (qui peut être le système de capture d'images lui-même), et un système éventuellement distinct de détermination du ou des paramètres de correction du défaut considéré. La correction de l'image I' sur la base des paramètres de correction c peut être effectuée par le système de détermination des paramètres de correction, ou bien par un système de correction séparé. Dans ce dernier cas, le système de correction comprend avantageusement une unité agencée pour recevoir les paramètres de correction c depuis le système de détermination de ces paramètres.

On notera que les systèmes mentionnés dans le présent document peuvent consister en de simples dispositifs, ou bien en des systèmes complexes incorporant une pluralité d'unités distinctes, responsable chacune d'une des fonctions décrites plus haut.

Les différentes étapes décrites plus haut peuvent en outre être réalisées en totalité ou en partie de façon logicielle, c'est-à-dire à l'aide d'un produit programme d'ordinateur comprenant des instructions de code adaptées à cet effet. En alternative ou en complément, certaines au moins de ces étapes peuvent être réalisées à l'aide d'un circuit électronique.

Des exemples d'application de la présente invention vont être décrits ci-après. Ces exemples ne sont pas limitatifs, d'autres applications pouvant être envisagées comme cela apparaîtra à l'homme du métier.

Selon un premier exemple d'application conforme aux revendications, illustré sur la figure 4, on suppose que le système de capture d'images 1 considéré présente le défaut de vignettage coloré. Comme expliqué plus haut, ce défaut produit, vis-à-vis d'une image I acquise (étape 14) comptant par exemple un canal rouge R, un canal vert G et un canal bleu B, une variation de colorimétrie dans le champ de l'image I. Le vignettage coloré étant un phénomène dépendant de l'angle d'incidence de la lumière reçue sur le capteur, la variation de colorimétrie qui en résulte est statistiquement d'un ordre de grandeur plus faible que la variation de colorimétrie issue de la scène S.

Dans une première partie au moins du champ de l'image I, on calcule une mesure $\mu(I)$ relative à au moins une couleur. Il peut s'agir d'un rapport de couleurs entre plusieurs canaux. Cette mesure comprend par exemple le rapport G/R des intensités lumineuses mesurées sur les canaux vert et rouge, comme indiqué sur la figure 4 (étape 15). Cette mesure peut être remplacée ou complétée par le rapport G/B par exemple.

On procède ensuite, dans une deuxième partie au moins du champ de l'image I (qui peut être confondue ou distincte de ladite première partie), à l'obtention d'une grandeur v estimative du défaut de vignettage coloré. L'obtention est telle que cette grandeur v dépend de la mesure $\mu(I)$ calculée et a une variation du même ordre de grandeur que la variation de couleur résultant du vignettage coloré.

A cet effet, on peut par exemple segmenter l'image I, comme décrit plus haut, afin d'y déterminer des zones homogènes Zi, c'est-à-dire des zones où la variation de G/R (et/ou G/B) est lente. On peut ainsi regrouper, au sein d'une zone homogène Zi, des points voisins de l'image I ayant des valeurs de G/R (et/ou G/B) proches, par exemple avec une différence inférieure à un seuil prédéterminé.

Pour modéliser le vignettage coloré et garantir les propriétés i/ et ii/ mentionnées plus haut, on peut par exemple chercher, en guise de grandeur v, une fonction à variations lentes comme un polynôme P(x,y) de degré 3 ou 4 par exemple, tel que pour tout point de coordon-

$$P(x,y) \approx \frac{G/R}{Gi/Ri}$$

nées (x,y), on a : (et/ou

$$P(x,y) \approx \frac{G/B}{Gi/Bi}$$

) à l'intérieur de la zone homogène Zi et $\nabla P(x,y) \approx 0$ en dehors des zones homogènes, où G, R et B représentent les intensités mesurées au point (x,y) sur les canaux vert, rouge et bleu respectivement, où Gi, Ri et Bi représentent les intensités mesurées en un point de référence de la zone Zi sur les canaux vert, rouge et bleu respectivement, et où V désigne l'opérateur gradient (étape 16).

Pour résoudre ce problème et obtenir le polynôme P(x,y) qui satisfait les conditions ci-dessus, on peut par exemple se ramener au problème quadratique et linéaire de minimisation des quantités suivantes :

$$\left| P(x,y) - \frac{G/R}{Gi/Ri} \right|^2 \quad \text{(et/ou} \quad \left| P(x,y) - \frac{G/B}{Gi/Bi} \right|^2$$

) à l'intérieur de la zone homogène Zi et $|\nabla P(x,y)|^2$ en dehors des zones homogènes.

Dans cet exemple, le polynôme P(x,y) obtenu donne directement des paramètres de correction du vignettage coloré (par exemple le polynôme lui-même, les coefficients de ce polynôme, ou autre), vis-à-vis d'au moins une image I', qui peut être distincte ou confondue avec l'image I. Un tel polynôme P(x,y) est défini dans tout le champ de l'image I'.

La correction basée sur ces paramètres de correction peut par exemple se faire de la manière suivante. Pour tout point de coordonnées (x,y) de l'image I', on laisse le canal G inchangé et on modifie la valeur sur le canal R (et/ou B), la valeur R' (et/ou B') corrigée étant telle que R'=P(x,y).R (et/ou B'=P(x,y).B).

En effet, puisque P(x,y) a été déterminé pour

$$\text{que} \quad P(x,y) \approx \frac{G/R}{Gi/Ri} \quad \text{(et/ou} \quad P(x,y) \approx \frac{G/B}{Gi/Bi} )$$

dans la zone homogène Zi, le rapport G/R' (et/ou G/B') d'un point situé dans cette zone Zi est sensiblement égal à Gi/Ri (et/ou Gi/Bi). Autrement dit, à l'intérieur de chaque zone homogène, les couleurs ont été modifiées pour correspondre sensiblement à celles du point de référence choisi dans ladite zone. La variation de colorimétrie liée au vignettage coloré est donc quasiment éliminée dans chaque zone homogène.

En dehors des zones homogènes, l'effet du vignettage coloré est également limité, puisque le polynôme P(x,y) a été déterminé pour traduire des variations lentes dans toute l'image I ($\nabla P(x, y) \approx 0$).

On comprendra que ce mode d'estimation et de correction du vignettage coloré n'est qu'un exemple parmi d'autres. En alternative, l'estimation et la correction de ce défaut pourraient être déterminées sans avoir à définir explicitement des zones homogènes dans l'image I.

On notera également que la correction du vignettage coloré par application d'un gain sur un ou plusieurs canaux n'est pas le seul modèle de correction. Une correction plus générale est par exemple l'application d'une matrice dont les coefficients dépendent de la position dans le champ et qui mélange les différents canaux de manière dépendante à la position dans le champ. La correction précédente correspond au cas particulier d'une matrice diagonale. On peut généraliser sans problème à des modèles d'ordre supérieur arbitraire.

L'exemple d'application qui vient d'être décrit en ce qui concerne le vignettage coloré peut être transposé simplement pour estimer le défaut de vignettage en luminance, selon un exemple non conforme aux revendications, qui fait que l'image acquise est plus sombre au bord qu'au centre.

Pour ce faire, plutôt que de s'intéresser à un rapport de valeurs sur différents canaux colorés (G/R et/ou G/B) comme mesure $\mu(I)$, on s'attache à une valeur d'intensité lumineuse sur un ou plusieurs canaux (par exemple, G ou R ou B). Pour le reste, la détermination d'un polynôme P(x,y), de façon similaire à ce qui vient d'être décrit, est bien adaptée à ce cas de figure également.

Selon un autre exemple d'application non conforme aux revendications, on cherche à estimer une variation de flou dans le champ de l'image I, par exemple du fait de la courbure de champ et/ou de l'aberration chromatique longitudinale introduite par le système de capture d'images 1.

Dans une première partie au moins du champ de l'image I, on calcule une mesure $\mu(I)$ relative à au moins un niveau de flou.

On procède ensuite, dans une deuxième partie au moins du champ de l'image I (qui peut être confondue ou distincte au moins partiellement de ladite première partie), à l'obtention d'une grandeur v estimative de la variation de flou. Cette grandeur v dépend de la mesure $\mu(I)$ calculée et a une variation du même ordre de grandeur que la variation résultant de la variation de flou. Pour ce faire, on peut appliquer des filtres de rehaussement local pour amener le niveau de flou à une valeur donnée.

A titre d'exemple, on peut calculer un niveau de flou en chaque point x de l'image I et pour chacun des canaux rouge R et vert G. Ces niveaux de flou sont notés $F_R(x)$ et $F_G(x)$. Puis sur un contour d'objet de la scène S identifié dans l'image I selon un algorithme de détection classique de contour, on fait en sorte que le flou relatif entre les canaux R et G, par exemple le rapport $F_R(x)$ / $F_G(x)$, soit globalement constant. A cet effet, on peut déterminer, en guise de grandeur v, une fonction à variations lentes comme un polynôme P(x) qui approxime un rapport $F_R(x)$ / $F_G(x)$ constant. En dehors du contour identifié, on peut minimiser par exemple le gradient de P(x), pour assurer la régularité du polynôme dans le champ.

Comme cela apparaîtra à l'homme du métier, bien d'autres défauts d'un système de capture d'images peuvent faire l'objet d'une estimation, en vue d'une correction éventuelle, selon les principes de l'invention. Quelques exemples non conformes aux revendications, sont donnés ci-après.

Ainsi, pour limiter les différences de niveaux de vert entre les pixels Gr et Gb d'un réseau de Bayer, on peut calculer comme mesure $\mu(I)$ le rapport Gr/Gb, et obtenir une grandeur v décrivant les variations de cross-talk.

Un autre défaut est le "flare" optique qui est un éblouissement du capteur lorsqu'une source de lumière puissante est proche du champ ou dans le champ. Le flare est dû à des réflexions parasites à l'intérieur du système optique. L'effet est de produire sur l'image un voile de lumière qui réduit le contraste et rend les couleurs ternes. De manière secondaire, le flare induit très souvent un écart entre Gr et Gb. L'écart entre Gr et Gb permet de détecter et mesurer les variations du flare et permet d'adapter le rendu des couleurs et du contraste à la scène. Ainsi, la mesure de caractéristique peut être l'écart entre Gr et Gb dépendant des conditions de prise de vue. La grandeur peut être un décalage du point noir dépendant des conditions de prise de vue et de la position dans le champ.

Selon un autre exemple non revendiqué, pour estimer l'astigmatisme, on peut calculer une mesure $\mu(I)$ de l'orientation d'une tache de flou.

Un autre exemple non revendiqué, concerne l'estimation de la distorsion géométrique. Ce défaut de système de capture d'images fait que les lignes droites d'une scène photographiée ne paraissent pas droites sur l'image acquise. Pour estimer ce défaut, on peut par exemple repérer dans l'image I acquise des contours réguliers. Puis on peut calculer une mesure $\mu(I)$ de courbure locale au niveau des contours ainsi repérés, et obtenir une grandeur v correspondant à une carte de grandissement dans le champ.

Un autre exemple non revendiqué, concerne l'aberration chromatique latérale. Ce défaut de système de capture d'images introduit un grandissement dépendant de la longueur d'onde. Pour estimer ce défaut, on peut par exemple repérer dans l'image I acquise des contours réguliers Puis on peut calculer une mesure $\mu(I)$ d'écart de position de ces contours selon différentes longueurs d'onde ou plages de longueurs d'onde (par exemple sur les différents canaux R,G,B), et obtenir une grandeur v correspondant à une carte de différences de position entre ces longueurs d'onde ou plages de longueurs d'onde. Cet écart de position ne peut être localement évalué que dans la direction orthogonale au contour. On note ainsi que dans le cas où l'aberration chromatique latérale entraîne un grandissement dans une direction radiale, le calcul de la mesure $\mu(I)$ peut n'être possible qu'à partir de contours ne passant pas par le centre de l'image I acquise. Si tous les contours passent par le centre de l'image, on ne pourra pas corriger l'aberration chromatique latérale, mais celle-ci n'a aucun effet sur l'image, ce qui rend la correction inutile. Dans un cas plus pratique et général, l'image contiendra une pluralité de contours dans une pluralité de directions. En utilisant le fait que l'aberration chromatique est un phénomène qui varie lentement dans le champ, on peut estimer la carte de déplacement v partout, et ceci dans toutes les directions.

Un autre exemple non revendiqué, concerne le niveau de noir non uniforme. Ce défaut fait qu'un système de capture d'images ayant reçu une certaine quantité de lumière retourne une réponse qui n'est pas tout-à-fait linéaire. En particulier, même en l'absence totale de lumière, la valeur retournée est non nulle et dépend de la position dans le champ. Pour estimer ce défaut, on peut calculer une mesure $\mu(I)$ correspondant à la réponse du capteur pour des parties sombres de l'image I acquise, et obtenir une grandeur v estimant la réponse du capteur dans tout le champ.

Un autre exemple non revendiqué, concerne le bruit non uniforme. Ce défaut est lié au fait qu'un système de capture d'images peut comprendre différentes parties générant des bruits respectifs d'intensité variable. Pour estimer ce défaut, on peut calculer une mesure $\mu(I)$ de variance locale du bruit, et obtenir une grandeur v en estimant des gains locaux qui étirent la variance locale du bruit. On peut alors éventuellement corriger une image I' en la débruitant à l'aide de paramètres de correction déduit de la grandeur v obtenue. L'image I' débruitée contient un bruit globalement uniforme.

**Revendications**

1. Procédé d'estimation de défaut de vignettage coloré d'un système de capture d'images (1), ledit défaut produisant, vis-à-vis d'au moins une première image (I) quelconque acquise par le système de capture d'images et représentant une scène (S) quelconque, une variation dans le champ de colorimétrie de la première image (I), la variation moyenne en amplitude dans le champ de colorimétrie de la première image (I) produite par le défaut de vignettage coloré étant d'un ordre de grandeur plus faible qu'une variation moyenne en amplitude dans le champ de colorimétrie introduite par la scène, le procédé comprenant :

   - calculer, en au moins certains points du champ, dans une première partie au moins du champ de la première image, une mesure $(\mu(I))$ relative à la colorimétrie de la première image (I) que le défaut fait varier dans le champ de l'image;
   - obtenir, dans une deuxième partie au moins du champ de la première image, une grandeur (v) estimative du défaut de vignettage coloré, à partir des mesures $(\mu(I))$ calculées, la grandeur (v) ayant une variation du même ordre de grandeur que la variation dans le champ de la colorimétrie de la première image produite par le défaut de vignettage coloré ; et
   - déterminer, à partir de la grandeur (v) obtenue, au moins un paramètre de correction (c) dudit défaut pour au moins une deuxième image (I') acquise par le système de capture d'images avec une condition d'éclairage identique ou similaire à celle de la première image, la deuxième image étant distincte de la première image.

2. Procédé selon la revendication 1, dans lequel la mesure $(\mu(I))$ est calculée relativement à au moins un canal de couleur de la première image (I), parmi un canal rouge (R), un canal vert (G) et un canal bleu (B).

3. Procédé selon l'une quelconque des revendications 1 à 2, dans lequel la mesure $(\mu(I))$ comprend au moins un rapport de couleurs entre plusieurs canaux de couleur parmi les canaux de couleur rouge (R), vert (G) et bleu (B) de la première image (I).

4. Procédé selon l'une quelconque des revendications 1 à 3, dans lequel la grandeur (v) est une pondération entre différentes cartes de valeurs prédéterminées, la pondération se rapportant à un point ou un groupe de points de la première image (I).

5. Procédé selon l'une quelconque des revendications précédentes, dans lequel la deuxième image (I') est acquise par le système de capture d'images juste après la première image (I).

6. Procédé selon l'une quelconque des revendications précédentes, dans lequel ledit paramètre de correction (c) est déterminé dans tout le champ de la deuxième image (I').

7. Procédé selon l'une quelconque des revendications précédentes, dans lequel la variation dans le champ de colorimétrie de la première image (I) produite par le défaut de vignettage coloré est dépendante d'au moins un paramètre de prise de vue et/ou condition de prise de vue de la première image, et dans lequel la deuxième image (I') est acquise par le système de capture d'images (1) avec ledit paramètre de prise de vue et/ou condition de prise de vue identique ou similaire à la première image.

8. Procédé selon l'une quelconque des revendications précédentes, dans lequel la variation dans le champ de colorimétrie de la première image (I) produite par le défaut de vignettage coloré est propre audit système de capture d'images (1).

9. Procédé selon la revendication 8, dans lequel ledit défaut dépend d'au moins une incertitude de fabrication dudit système de capture d'images (1).

10. Procédé selon l'une quelconque des revendications précédentes, comprenant une identification, dans ladite première partie au moins du champ de la première image, d'un ensemble de zones homogènes (3;4) à l'intérieur de chacune desquelles ladite mesure ($\mu$(I)) calculée a une variation du même ordre de grandeur que la variation dans le champ de colorimétrie de la première image (I) produite par le défaut de vignettage coloré, et dans lequel l'obtention de ladite grandeur est effectuée en tenant compte des zones homogènes identifiées.

11. Procédé selon la revendication 10, dans lequel l'obtention de ladite grandeur (v), à l'intérieur d'une zone homogène dudit ensemble de zones homogènes, est effectuée en rapportant ladite mesure calculée à une mesure relative à la colorimétrie de la première image (I) et calculée en un point de référence (7;8) de ladite zone homogène.

12. Système agencé pour estimer un défaut de vignettage coloré d'un système de capture d'images (1) selon l'une quelconque des revendications précédentes, ledit défaut produisant, vis-à-vis d'au moins une première image (I) quelconque acquise par le système de capture d'images et représentant une scène (S) quelconque, une variation dans le champ de colorimétrie de la première image (I), la variation moyenne en amplitude dans le champ de colorimétrie de la première image (I) produite par le défaut étant d'un ordre de grandeur plus faible qu'une variation moyenne en amplitude dans le champ de colorimétrie introduite par la scène, le système comprenant :

    - une unité de calcul, dans une première partie au moins du champ de la première image, d'une mesure ($\mu$(I)), en au moins certains points du champ, relative à la colorimétrie de la première image (I) que le défaut fait varier dans le champ de l'image;
    - une unité d'obtention, dans une deuxième partie au moins du champ de la première image, d'une grandeur (v) estimative du défaut de vignettage coloré, à partir des mesures ($\mu$(I)) calculées, la grandeur (v) ayant une variation du même ordre de grandeur que la variation dans le champ de la colorimétrie de la première image produite par le défaut de vignettage coloré ; et
    - une unité de détermination, à partir de la grandeur (v) obtenue, d'au moins un paramètre de correction (c) dudit défaut pour au moins une deuxième image (I') acquise par le système de capture d'images avec une condition d'éclairage identique ou similaire à celle de la première image, la deuxième image étant distincte de la première image.

13. Produit programme d'ordinateur et/ou circuit électronique comprenant des instructions de code adaptées pour mettre en oeuvre le procédé d'estimation de défaut de vignettage coloré d'un système de capture d'images (1) selon l'une quelconque des revendications 1 à 11 lorsque les instructions sont exécutées par un ordinateur.

14. Système selon la revendication 12, dans lequel la mesure ($\mu$(I)) est calculée relativement à au moins un canal de couleur de la première image (I), parmi un canal rouge (R), un canal vert (G) et un canal bleu (B).

15. Système selon l'une quelconque des revendications 12 et 14, dans lequel la mesure ($\mu$(I)) comprend au moins un rapport de couleurs entre plusieurs canaux de couleur parmi les canaux de couleur rouge (R), vert (G) et bleu (B) de la première image (I).

**Patentansprüche**

1. Verfahren zum Abschätzen eines Farbvignettierungsfehlers eines Bilderfassungssystems (1), wobei der Fehler gegenüber mindestens einem beliebigen ersten Bild (I), das von dem Bilderfassungssystem aufgenommen wird und eine beliebige Szene (S) darstellt, eine Variation im Farbmessfeld des ersten Bildes (I) erzeugt, wobei die durch den Farbvignettierungsfehler erzeugte mittlere Amplitudenvariation im Farbmessfeld des ersten Bildes (I) um eine Größenordnung kleiner ist als eine durch die Szene eingeführte mittlere Amplitudenvariation im Farbmessfeld, wobei das Verfahren umfasst:

    - Berechnen, an mindestens einigen Punkten des Feldes in mindestens einem ersten Teil des Feldes des ersten Bildes, eines Maßes ($\mu$(I)) in Bezug auf die Farbmessung des ersten Bildes (I), das der Fehler in dem Feld des Bildes variieren lässt;
    - Erhalten, in mindestens einem zweiten Teil des Feldes des ersten Bildes, einer geschätzten Größe (v) des Farbvignettierungsfehlers auf Grundlage der berechneten Maße ($\mu$(I)), wobei die Größe (v) eine Variation derselben Größenordnung wie die durch den Farbvignettierungsfehler in dem Feld der Farbmessung des ersten Bildes erzeugte Variation aufweist; und
    - Bestimmen, auf Grundlage der erhaltenen Größe (v), mindestens eines Parameters zur Korrektur (c) des Fehlers für mindestens ein zweites Bild (I'), das von dem Bilderfassungssystem mit einer gleichen oder einer ähnlichen Beleuchtungsbedingung wie der des ersten Bildes aufgenommen wird, wobei sich das zweite Bild von dem ersten Bild unterscheidet.

2. Verfahren nach Anspruch 1, wobei das Maß ($\mu$(I)) in Bezug auf mindestens einen Farbkanal des ersten Bildes (I) aus einem Rotkanal (R), einem Grünkanal (G) und einem Blaukanal (B) berechnet wird.

3. Verfahren nach einem der Ansprüche 1 bis 2, wobei das Maß ($\mu$(I)) mindestens ein Farbverhältnis zwischen mehreren Farbkanälen aus dem roten (R), dem grünen (G) und dem blauen (B) Farbkanal des ersten Bildes (I) umfasst.

4. Verfahren nach einem der Ansprüche 1 bis 3, wobei die Größe (v) eine Gewichtung zwischen verschiedenen Karten mit vorbestimmten Werten ist, wobei sich die Gewichtung auf einen Punkt oder eine Gruppe von Punkten des ersten Bildes (I) bezieht.

5. Verfahren nach einem der vorstehenden Ansprüche, wobei das zweite Bild (I') von dem Bilderfassungssystem unmittelbar nach dem ersten Bild (I) aufgenommen wird.

6. Verfahren nach einem der vorstehenden Ansprüche, wobei der Korrekturparameter (c) im gesamten Feld des zweiten Bildes (I') bestimmt wird.

7. Verfahren nach einem der vorstehenden Ansprüche, wobei die durch den Farbvignettierungsfehlers erzeugte Variation im Farbmessfeld in dem ersten Bild (I) von mindestens einem Aufnahmeparameter und/oder einer Aufnahmebedingung des ersten Bildes abhängig ist, und wobei das zweite Bild (I') vom Bilderfassungssystem (1) mit dem gleichen oder einem ähnlichen Aufnahmeparameter und/oder der gleichen oder einer ähnlichen Aufnahmebedingung wie das erste Bild aufgenommen wird.

8. Verfahren nach einem der vorstehenden Ansprüche, wobei die durch den Farbvignettierungsfehlers erzeugte Variation im Farbmessfeld in dem ersten Bild (I) dem Bilderfassungssystem (1) eigen ist.

9. Verfahren nach Anspruch 8, wobei der Fehler von mindestens einer Herstellungsunsicherheit des Bilderfassungssystems (1) abhängt.

10. Verfahren nach einem der vorstehenden Ansprüche, das ein Identifizieren, in dem mindestens ersten Teil des Feldes des ersten Bildes, eines Satzes homogener Bereiche (3; 4) umfasst, innerhalb jedes von denen das berechnete Maß ($\mu$(I)) eine Variation derselben Größenordnung wie die durch den Farbvignettierungsfehlers erzeugte Variation im Farbmessfeld im des ersten Bildes (I), und wobei das Erhalten der Größe unter Berücksichtigung der identifizierten homogenen Bereiche durchgeführt wird.

11. Verfahren nach Anspruch 10, wobei das Erhalten der Größe (v) innerhalb eines homogenen Bereichs des Satzes homogener Bereiche durchgeführt wird, indem das berechnete Maß mit einem Maß, das sich auf das Farbmessfeld des ersten Bildes (I) bezieht und an einem Referenzpunkt (7; 8) des homogenen Bereichs berechnet wurde, in Verhältnis gesetzt wird.

12. System, das eingerichtet ist, um einen Farbvignettierungsfehler eines Bilderfassungssystems (1) nach einem der vorstehenden Ansprüche abzuschätzen, wobei der Fehler gegenüber mindestens einem beliebigen ersten Bild (I), das von dem Bilderfassungssystem aufgenommen wird und eine beliebige Szene (S) darstellt, eine Variation im Farbmessfeld des ersten Bildes (I) erzeugt, wobei die durch den Fehler erzeugte mittlere Amplitudenvariation im Farbmessfeld des ersten Bildes (I) um eine Größenordnung kleiner ist als eine durch die Szene eingeführte mittlere Amplitudenvariation im Farbmessfeld, wobei das System umfasst:

- eine Einheit zum Berechnen, in mindestens einem ersten Teil des Feldes des ersten Bildes, eines Maßes ($\mu$(I)), an mindestens einigen Punkten des Feldes, in Bezug auf die Farbmessung des ersten Bildes (I), das der Fehler in dem Feld des Bildes variieren lässt;
- eine Einheit zum Erhalten, in mindestens einem zweiten Teil des Feldes des ersten Bildes, einer geschätzten Größe (v) des Farbvignettierungsfehlers auf Grundlage der berechneten Maße ($\mu$(I)), wobei die Größe (v) eine Variation derselben Größenordnung wie die durch den Farbvignettierungsfehler in dem Feld der Farbmessung des ersten Bildes erzeugte Variation aufweist; und
- eine Einheit zum Bestimmen, auf Grundlage der erhaltenen Größe (v), mindestens eines Parameters zur Korrektur (c) des Fehlers für mindestens ein zweites Bild (I'), das von dem Bilderfassungssystem mit einer gleichen oder einer ähnlichen Beleuchtungsbedingung wie der des ersten Bildes aufgenommen wird, wobei sich das zweite Bild von dem ersten Bild unterscheidet.

13. Computerprogrammprodukt und/oder elektronische Schaltung, das bzw. die Codeanweisungen umfasst, die geeignet sind, um das Verfahren zum Abschätzen eines Farbvignettierungsfehlers eines Bilderfassungssystems (1) nach einem der Ansprüche 1 bis 11 umzusetzen, wenn die Anweisungen von einem Computer ausgeführt werden.

**14.** System nach Anspruch 12, wobei das Maß ($\mu(I)$) in Bezug auf mindestens einen Farbkanal des ersten Bildes (I) aus einem Rotkanal (R), einem Grünkanal (G) und einem Blaukanal (B) berechnet wird.

**15.** System nach einem der Ansprüche 12 und 14, wobei das Maß ($\mu(I)$) mindestens ein Farbverhältnis zwischen mehreren Farbkanälen aus dem roten (R), dem grünen (G) und dem blauen (B) Farbkanal des ersten Bildes (I) umfasst.

**Claims**

**1.** Method for estimating a colored vignetting defect of an image-capturing system (1), said defect producing, for any at least one first image (I) captured by the image-capturing system and representing any scene (S), a variation within the colorimetry field of the first image (I), the mean variation of amplitude in the colorimetry field of the first image (I) produced by the colored vignetting defect being an order of magnitude lower than a mean variation within the colorimetry field introduced by the scene, the method comprising:

- calculating, in at least certain points of the field, in at least a first portion of the field of the first image, a measurement $\mu(I)$ relative to the colorimetry of the first image (I) for which the defect produces a variation in the field of the image;
- obtaining, in at least a second portion of the field of the first image, an estimated magnitude (v) of the colored vignetting defect, based on the calculated measurements ($\mu(I)$), the magnitude (v) having a variation of the same order of magnitude as the variation within the colorimetry field of the first image produced by the colored vignetting defect; and
- determining, from the obtained magnitude (v), at least one correction parameter (c) of said defect for at least one second image (I') captured by the image-capturing system with a lighting condition which is identical or similar to that of the first image, the second image being different from the first image (I).

**2.** Method according to claim 1, wherein the measurement $\mu(I)$ is calculated relative to at least a color channel of the first image (I), among a red (R) channel, a green (G) channel and a blue (B) channel.

**3.** Method according to any one of claims 1 to 2, wherein the measurement $\mu(I)$ comprises at least a color ratio between several color channels among the channels of red (R), green (G) and blue (B) colors of the first image (I).

**4.** Method according to any one of claims 1 to 3, wherein the magnitude (v) is a weighting among different maps of predetermined values, the weighting being directed to a point or a group of points of the first image (I).

**5.** Method according to any one of the preceding claims, wherein the second image (I') is acquired by the image-capturing system just after the first image (I).

**6.** Method according to any one of the preceding claims, wherein said correction parameter (c) is determined for the entire field of the second image (I').

**7.** Method according to any one of the preceding claims, wherein the variation within the colorimetry field of the first image (I) produced by the colored vignetting defect is dependent on at least one image capture parameter and/or image capture condition of the first image, and wherein the second image (I') is captured by the image-capturing system (1) with said image capture parameter and/or image capture condition being identical or similar to the first image.

**8.** Method according to any one of the preceding claims, wherein the variation within the colorimetry field of the first image (I) produced by the colored vignetting defect is specific to said image-capturing system (1).

**9.** Method according to claim 8, wherein said defect depends on at least one uncertainty in the manufacture of said image-capturing system (1).

**10.** Method according to any one of the preceding claims, comprising an identification, in said at least first portion of the field of the first image, of a set of homogeneous zones (3;4) within each of which said calculated measurement ($\mu(I)$) varies with the same order of magnitude as the variation within the colorimetry field of the first image (I) produced by the colored vignetting defect, and wherein the obtaining of said magnitude is performed taking into account the identified homogeneous zones.

**11.** Method according to claim 10, wherein the obtaining of said magnitude (v), within a homogeneous zone of said set of homogeneous zones, is performed by relating said calculated measurement to a measurement related to the colorimetry of the first image (I) and calculated at a reference point (7;8) of said homogeneous zone.

**12.** System adapted for estimating a colored vignetting defect of an image-capturing system (1) according to any one of the above claims, said defect producing, for at least any one first image (I) captured by the image-capturing system and representing any scene (S), a variation within the colorimetry field the first image (I), the mean variation of amplitude in the colorimetry field of the first image (I) produced by the colored vignetting defect being an order of magnitude lower than a mean variation within the colorimetry field introduced by the scene, the system comprising:

- a unit for calculating, in at least one first portion of the field of the first image, a measurement ($\mu(I)$), in at least certain points of the field, relative to the colorimetry of the first image (I) for which the defect produces a variation in the field of the image;
- a obtaining unit, for obtaining, in at least a second portion of the field of the first image, an estimated magnitude (v) of the colored vignetting defect, based on the calculated measurements ($\mu(I)$), the magnitude (v) having a variation of the same order of magnitude as the variation within the colorimetry field of the first image produced by the colored vignetting defect; and
- a unit for determining, from the obtained magnitude (v), at least one correction parameter (c) of said defect for at least one second image (I') captured by the image-capturing system with a lighting condition which is identical or similar to that of the first image, the second image being different from the first image (I).

13. Computer program product and/or electronic circuit comprising code instructions adapted for implementing the method for estimating a colored vignetting defect of an image-capturing system (1) according to any one of claims 1 to 11 whenever the instructions are executed by a computer.

14. System according to claim 12, wherein the measurement $\mu(I)$ is calculated relative to at least a color channel of the first image (I), among a red (R) channel, a green (G) channel and a blue (B) channel.

15. System according to any of claims 12 and 14, wherein the measurement $\mu(I)$ comprises at least a color ratio between several color channels among the channels of red (R), green (G) and blue (B) colors of the first image (I).

# FIG. 1

# FIG. 2

**FIG. 3**

$$P\,(x,\,y) \cong \dfrac{G\,/\,R}{Gi\,/\,Ri}$$

$$\nabla P\,(x,\,y) \cong 0$$

**FIG. 4**

## RÉFÉRENCES CITÉES DANS LA DESCRIPTION

**Documents brevets cités dans la description**

- WO 03007241 A
- WO 03007237 A
- WO 03007242 A
- WO 03007236 A
- WO 03007239 A
- US 2008055455 A1
- US 2003234879 A1
- US 2003234872 A1